# EUROPÄISCHE PATENTSCHRIFT

(11) **EP 1 186 906 B1**
(45) Veröffentlichungstag und Bekanntmachung des Hinweises auf die Patenterteilung: **02.08.2006**
(21) Anmeldenummer: 01121868.2
(22) Anmeldetag: 11.09.2001
(51) Int. Cl.: G01S 13/10, G01S 7/40, G01S 13/88, G01F 23/284

(54) **Verfahren und Vorrichtung zur Entfernungsmessung**
Method and device for measuring distance
Méthode et dispositif de télémètrie

(30) Priorität: 11.09.2000 DE 10044769
(43) Veröffentlichungstag der Anmeldung: 13.03.2002
(73) Patentinhaber: VEGA Grieshaber KG, 77709 Wolfach (DE)
(72) Erfinder: Fünfgeld, Martin, 77749 Hohberg (DE)
(74) Vertreter: Patentanwälte Westphal, Mussgnug & Partner

(56) Entgegenhaltungen:
- EP-A- 0 780 665
- DE-A- 4 240 491
- DE-A- 4 332 071
- DE-A- 4 405 238

## Beschreibung

Die vorliegende Erfindung betrifft ein Verfahren zur Messung von Signallaufzeiten bzw. zur Entfernungsmessung gemäß den Merkmalen des Oberbegriffs des Anspruchs 1.

Ein derartiges Verfahren ist insbesondere zur Messung des Füllstandes in Behältern geeignet. Hierzu ist es aus der EP 0 780 665 A2 bekannt, einen Wellenleiter, dessen Längsrichtung in Richtung von Füllstandsänderungen in dem Behälter verläuft, in den Behälter einzubringen, und ein hochfrequentes elektromagnetisches Signal in den Wellenleiter einzukoppeln. An einer Grenzfläche zweier in dem Behälter befindlicher Medien, beispielsweise Luft und ein flüssiges Füllgut, ändert sich die Impedanz des Wellenleiters. Der bei dem bekannten Verfahren in den Wellenleiter eingekoppelte Signalimpuls wird im Bereich der Impedanzänderung des Wellenleiters reflektiert und das reflektierte Signal wird als Echosignal am Eingang des Wellenleiters empfangen. Das Zeitintervall zwischen dem Aussenden des Sendeimpulses und dem Empfang eines reflektierten Impulses dient als Maß für die Entfernung zwischen dem Eingang des Wellenleiters und dem Ort der Impedanzänderung an dem Wellenleiter. Aus diesem Zeitintervall kann die Füllstandshöhe in dem Behälter ermittelt werden.

Aus der DE 42 40 491 C2 ist es bekannt, bei Vorrichtungen die zur Entfernungsmessung Signallaufzeiten auswerten, einem Echosignal, das von einem Objekt, dessen Abstand zu messen ist, reflektiert wird, einen Referenzimpuls zu überlagern. Der Referenzimpuls zu Beginn des Echosignals gibt dabei Aufschluss über den Zeitpunkt der Aussendung des Sendesignals, so dass die Entfernung zu dem Objekt durch die Auswertung der Zeitdifferenz zwischen dem Referenzimpuls und einem reflektierten Impuls des Echosignals ermittelt werden kann.

Zur Ermittlung der zeitlichen Position des reflektierten Impulses in dem Echosignal ist es bekannt, den zeitlichen Verlauf des empfangenen Echosignals mit einem zweiten Referenzsignal zu vergleichen, das ohne Objekt in der Messstrecke, bzw. bei nicht gefülltem Behälter, ermittelt wurde. Punkte der Echosignalkurve, an denen die Amplitude der Echosignalkurve von der Amplitude der Referenzsignalkurve abweicht, deuten auf Impulse durch eine Reflexion an dem Objekt oder auf eine Impedanzänderung an dem Wellenleiter hin.

Probleme können sich hierbei durch unterschiedliche Amplituden-Offsets des zweiten Referenzsignals oder des Echosignals ergeben, die einen Vergleich der beiden Signale erschweren.

Ziel der vorliegenden Erfindung ist es daher, ein Verfahren zur Entfernungsmessung, insbesondere zur Füllstandsmessung, zur Verfügung zu stellen, das eine präzise Messung durch Vergleich eines Echosignals mit einem Referenzsignal ermöglicht und bei dem Probleme im Zusammenhang mit unterschiedlichen Amplituden-Offsets nicht auftreten.

Dieses Ziel wird durch ein Verfahren gemäß den Merkmalen des Anspruchs 1 gelöst.

Danach wird bei dem erfindungsgemäßen Verfahren zur Entfernungsmessung ein Signal in Richtung eines zu messenden Objekts ausgesendet, und von einer Empfangseinrichtung wird ein Echosignal, das einen ersten Referenzimpuls aufweist, empfangen. Das Echosignal wird dann mit einem zweiten Referenzsignal, das einen zweiten Referenzimpuls aufweist, zur Ermittlung einer Signallaufzeit verglichen. Zur Ermittlung eines Amplituden-Offset zwischen dem Echosignal und dem zweiten Referenzsignal werden ein erster Vergleichswert des Echosignals und ein zweiter Vergleichswert des zweiten Referenzsignals miteinander verglichen werden, wobei die ersten und zweiten Vergleichswerte zeitlich jeweils vor den ersten und zweiten Referenzimpulsen in einem Bereich der Echosignalkurve und der zweiten Referenzsignalkurve liegen, in denen diese wenigstens annäherungsweise eine Steigung Null aufweisen.

Die vorliegende Erfindung macht sich zunutze, dass das Echosignal, innerhalb eines Zeitintervalls vor dem Aussenden des Signalimpulses, und somit vor dem Auftreten des ersten Referenzimpulses, eine konstante Amplitude aufweist, die sich durch einen Amplituden-Offset vom Amplitudenwert Null unterscheidet. Gleiches gilt für das zweite Referenzsignal, welches ein abgespeichertes Echosignal ist, das unter bestimmten Bedingungen -üblicherweise bei leerem Behälter oder ohne zu messendes Objekt in der Messstrecke- ermittelt wurde. Das erfindungsgemäße Verfahren ermittelt in den Bereichen der konstanten Signalverläufe zeitlich vor den ersten und zweiten Referenzimpulsen des Echosignals und des zweiten Referenzsignals den Offset zwischen dem Echosignal und dem zweiten Referenzsignal, um nach dem Addieren bzw. Subtrahieren dieses Offset von einem der beiden Signale das Echosignal und das zweite Referenzsignal besser vergleichen zu können, um somit den Zeitpunkt der Reflexion des Signalimpulses an dem zu messenden Objekt ermitteln zu können.

Die Referenzimpulse des Echosignals und des Referenzsignals können Impulse sein, die speziell für Laufzeitmessungen als zeitliche Referenzpunkte in das jeweilige Signal eingekoppelt wurden, oder es kann sich hierbei um Impulse handeln, die in jedem Echosignal einer gegebenen Messtrecke, beispielsweise durch Reflexion eines ausgesendeten Signals an einem Übergang zwischen einer Leitung und einem Wellenleiter entstehen.

Vorteilhafte Ausgestaltungen sind Gegenstand der Erfindung.

Das erfindungsgemäße Verfahren mit Offsetkompensation ist für alle Verfahren geeignet, bei denen eine Entfernungsmessung mittels der Aussendung eines optischen, akustischen oder elektromagnetischen Signals erfolgt und bei denen die Entfernung durch Auswerten von Signallaufzeiten zwischen dem Aussenden eines Signalimpulses in Richtung des zu messenden Objekt und dem Empfang eines an dem Objekt reflektierten Impulses erfolgt.

Das Verfahren ist insbesondere zur Messung des Füllstandes in Behältern mittels leitungsgebundener Mikrowellensignale geeignet. Die Impedanz eines Wellenleiters, in dem die Mikrowelle geführt ist, ändert sich an der Stelle, an der ein Übergang zwischen zwei verschiedenen Medien, oder auch zwischen zwei gleichen Medien mit unterschiedlicher Dichte, vorliegt. An diesem Ort der Impedanzänderung kommt es zu einer Teilreflexion des in den Wellenleiter eingekoppelten Mikrowellensignals, dessen Frequenz bis zu 2GHz betragen kann. Die Entfernungsmessung mittels einer geführten und reflektierten Mikrowelle wird auch als TDR-Verfahren (TDR = Time Domain Reflectometry) bezeichnet.

Gemäß einer Ausführungsform der Erfindung ist vorgesehen, dass zur Ermittlung des Offset jeweils ein Supremum (das heißt ein Maximum bei positiven Impulsen und ein Minimum bei negativen Impulsen) der Amplitude des ersten Referenzimpulses und ein Supremum der Amplitude des zweiten Referenzimpulses ermittelt wird und dass jeweils ein Amplitudenwert der Echosignalkurve und der zweiten Referenzsignalkurve, der eine vorbestimmte Zeitdauer vor dem jeweiligen Supremum liegt, als erster und zweiter Vergleichswert herangezogen wird. Die Zeitdauer ist dabei so gewählt, dass die Echosignalkurve und die Signalkurve des zweiten Referenzsignals diese Zeitdauer vor dem Supremum des ersten und zweiten Referenzimpulses eine wenigstens annäherungsweise konstante Amplitude aufweisen.

Anstelle des Maximums des ersten und zweiten Referenzimpulses können als Ausgangspunkte zur Offsetermittlung auch Amplitudenwerte des ersten und zweiten Referenzimpulses herangezogen werden, die vor den jeweiligen Maxima liegen und jeweils einen vorgegebenen Prozentsatz des jeweiligen Maximums als Amplitude aufweisen.

Die Ermittlung des Offset zwischen der Echosignalkurve und der Kurve des zweiten Referenzsignals erfolgt bei dem erfindungsgemäßen Verfahren vorzugsweise mittels eines Signalprozessors, eines herkömmlichen Mikroprozessors oder eines herkömmlichen Computers, auf dem ein geeignetes Programm abläuft. Sowohl das Echosignal als auch das zweite Referenzsignal liegen hierzu als Folge von Abtastwerten vor, wobei die Frequenz zur Erzeugung der Abtastwerte aus den zeitkontinuierlichen Signalen höher als die maximale Frequenz der beiden zu vergleichenden Signale ist.

Gemäß einer weiteren Ausführungsform des erfindungsgemäßen Verfahrens ist vorgesehen, dass bei dem Echosignal und dem zweiten Referenzsignal zur Ermittlung des ersten und zweiten Vergleichswertes ausgehend von einem Maximum oder von einem Amplitudenwert, der in einem festen Verhältnis zum Maximum steht, benachbarte Amplitudenwerte miteinander verglichen werden. Werden dabei Bereiche der Signalkurve erreicht, bei denen sich benachbarte Amplitudenwerte, bzw. benachbarte Abtastwerte, nicht mehr unterscheiden, so werden diese Amplitudenwerte als Vergleichswerte herangezogen.

Um den Einfluss von unvermeidlichen geringen Schwankungen des Echosignals und des zweiten Referenzsignals in den an sich konstanten Abschnitten vor dem ersten und zweiten Referenzimpuls zu verringern, ist vorgesehen, dass mehrere erste und zweite Vergleichswerte gebildet werden, deren Mittelwerte zur Bestimmung des Offset herangezogen werden.

Um gegebenenfalls einen bestehenden zeitlichen Offset zwischen dem Echosignal und dem zweiten Referenzsignal eliminieren zu können, ist gemäß einer weiteren Ausführungsform der Erfindung vorgesehen, dass die zeitliche Lage der Maxima des ersten und zweiten Referenzimpulses miteinander verglichen werden.

Gegenstand der Erfindung ist des weiteren eine Vorrichtung zur Durchführung des erfindungsgemäßen Verfahrens.

Die vorliegende Erfindung wird nachfolgend in Ausführungsbeispielen anhand von Figuren näher erläutert. In den Figuren zeigt:
- Figur 1:: Ausführungsbeispiel einer erfindungsgemäßen Vorrichtung zur Durchführung eines erfindungsgemäßen Verfahrens;
- Figur 2:: Signalverlauf eines zweiten Referenzsignals;
- Figur 3:: Signalverlauf eines Echosignals;
- Figur 4:: Ausschnittsweise gemeinsame Darstellung von zweitem Referenzsignal und Echosignal zur Ermittlung des Offset.

In den Figuren bezeichnen, sofern nicht anders angegeben, gleiche Bezugszeichen gleiche Teile und Signale mit gleicher Bedeutung.

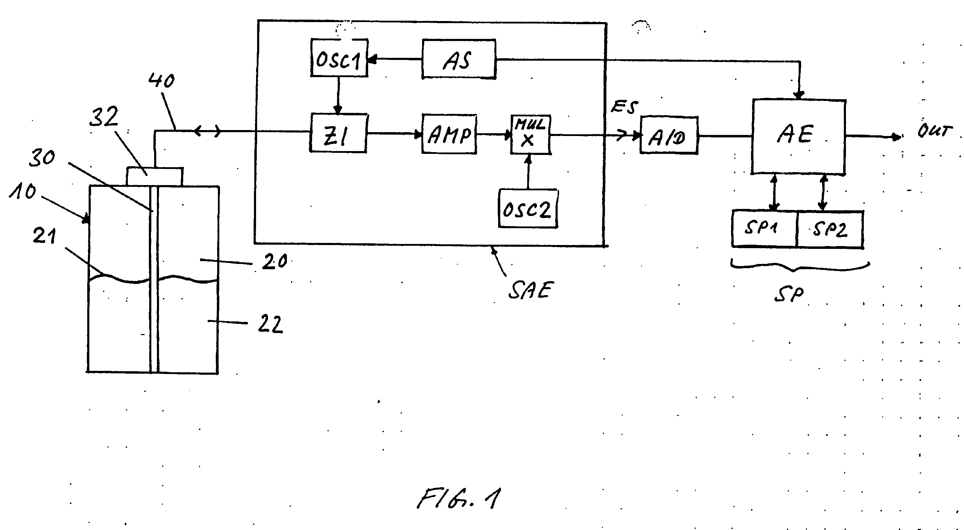

Figur 1 zeigt ein Ausführungsbeispiel einer erfindungsgemäßen Vorrichtung zur Durchführung eines erfindungsgemäßen Verfahrens zur Entfernungsmessung, insbesondere zur Füllstandsmessung. Das Messprinzip der in Figur 1 dargestellten Vorrichtung basiert auf der Messung von Signallaufzeiten, bzw. auf der Messung von Verzögerungszeiten zwischen dem Aussenden eines Messsignals und dem Empfang eines reflektierten Signals, bzw. Echosignals. Zur Messung des Füllstandes ist dazu in einen Behälter 10 ein Wellenleiter 30 eingebracht, der als Koaxialleitung, Einzeldraht oder Zweidrahtleitung ausgebildet sein kann und der sich von oben nach unten in dem Behälter 10 erstreckt. In einem oberen Bereich des Behälters 10 ist eine Anschlussanordnung vorgesehen, die zum Befestigen des Wellenleiters 30 an dem Behälter 10 und zum Anschließen des Wellenleiters an eine Verbindungsleitung 40 zu einer Sende- und Empfangseinheit SAE dient.

Der Behälter dient zur Lagerung eines Mediums 20, insbesondere einer Flüssigkeit oder von Schüttgut, dessen Pegelstand in Figur 1 durch das Bezugszeichen 21 gekennzeichnet ist. Über der Flüssigkeit befindet sich ein weiteres Medium, insbesondere ein Gas, beispielsweise Luft.

An den Wellenleiter 30 ist über die Verbindungsleitung 40 die Sende- und Empfangseinheit SAE angeschlossen, welche ein zur Füllstandsmessung mittels der dargestellten Vorrichtung erforderliches Mikrowellensignal an der Verbindungsleitung 40 bereitstellt und welche ein Echosignal, welches aus Reflexionen des Sendesignals in dem Wellenleiter 30 resultiert, über die Verbindungsleitung 40 aufnimmt und als aufbereitetes Echosignal ES an einer Ausgangsklemme AK zur Verfügung stellt. Bei der erfindungsgemäßen Vorrichtung macht man sich zunutze, dass an dem Wellenleiter 30 in dem Übergangsbereich zwischen der Luft 20 und der Flüssigkeit 22 eine Impedanzänderung vorliegt, wodurch an dieser Stelle das Sendesignal in dem Wellenleiter 30 teilweise reflektiert wird. Aus der Zeitdifferenz zwischen dem Aussenden des Impulses und dem Empfang des reflektierten Impulses kann auf die Höhe des Füllstandes der Flüssigkeit 22 in dem Behälter 10 geschlossen werden. Zur Ermittlung der Zeitdifferenz zwischen dem Aussenden des Impulses und dem Empfang des reflektierten Impulses wird dem Echosignal bei der Vorrichtung gemäß Fig. 1 ein erster Referenzimpuls, bzw. ein erstes Referenzsignal, überlagert, wobei der erste Referenzimpuls als zeitliche Referenz bezüglich des Sendeimpulses verwendet wird.

Eine derartige Sende- und Empfangseinheit SAE zur Abgabe eines Sendeimpulses, zum Empfang reflektierter Impulse und zur Bildung eines Echosignals aus den reflektierten Impulsen und einem ersten Referenzsignal ist aus der DE 42 40 491 C2 bekannt, auf deren Beschreibung hier ausdrücklich Bezug genommen wird. Eine derartige Sende- und Empfangseinheit SAE weist einen ersten Oszillator OSZ1 auf, der angesteuert durch eine Ablaufsteuerung AS einen Sendeimpuls zur Verfügung stellt, der über einen Zirkulator und die Verbindungsleitung 40 in den Wellenleiter 30 eingekoppelt wird. Ein Teil der Leistung des Sendeimpulses wird über den Zirkulator ZI dem Verstärker AMP zugeführt, wobei dem Verstärker AMP ein Mischer mit einem Multiplikator MUL und einem zweiten Oszillator OSZ2 nachgeschaltet ist, der aus dem hochfrequenten Verstärkerausgangssignal ein Echosignal ES mit einer niedrigeren Frequenz erzeugt. Über den Zirkulator ZI werden dem Verstärker AMP und dem Mischer MUL, OSZ2 auch die in dem Wellenleiter 30 reflektierten Impulse ES zugeführt. Der Zirkulator überlagert somit dem aus den reflektierten Impulsen bestehenden Signal ein aus dem Sendeimpuls abgeleitetes erstes Referenzimpuls zur Bildung des Echosignals ES.

Der Ausgangsklemme AK der Sende- und Empfangseinheit SAE ist erfindungsgemäß ein Analog-Digital-Wandler und eine Auswerteeinheit AE mit einem Speicher SP nachgeschaltet, deren Funktion noch näher erläutert wird.

Zur Messung des Füllstandes mittels der in Fig. 1 dargestellten Vorrichtung wird zunächst ein Echosignal ES bei einem nicht gefüllten Behälter 10 erzeugt und als zweites Referenzsignal nach einer Analog-Digital-Wandlung in der Speichereinheit SP abgespeichert. Ein Echosignal, welches bei einem gefüllten Behälter 10 erzeugt wird, unterscheidet sich von dem Echosignal bei einem leeren Behälter durch wenigstens einen zusätzlichen Impuls, der aus der Reflektion des Sendeimpulses an der Grenzfläche 21 zwischen der Flüssigkeit 22 und dem Gas 20 resultiert. Über den Zeitpunkt des Empfangs dieses zusätzlichen Impulses, der durch Vergleich des zweiten Referenzsignals mit dem Echosignal ermittelt wird, lässt sich die Füllstandshöhe in dem Behälter 10 ermitteln.

Fig. 2 zeigt einen typischen Signalverlauf eines bei einem leeren Behälter 10 ermittelten Echosignal, welches als zweites Referenzsignal RS2 dient. Dieses Signal befindet sich zunächst, wenn keine reflektierten Signale aus dem Wellenleiter 30 empfangen werden, auf einem niedrigen Pegel und weist dann einen zweiten Referenzimpuls P21 auf, der die Abgabe des Sendeimpulses an den Wellenleiter 30 kennzeichnet und der in dem Zirkulator ZI bei Aussendung des Sendeimpulses dem Echosignal überlagert wird. Der nächste markante Punkt in dem Verlauf des zweiten Referenzsignals RS2 ist ein negativer Impuls P22, der aus einer Reflexion des Sendeimpulses an dem Wellenleiter 30 beim Übergang von der Verbindungsleitung 40 auf den Wellenleiter 30 resultiert. Ein weiterer -in Figur 2 negativer- Impuls P23 des zweiten Referenzsignals RS2 resultiert aus einer Reflexion des Sendeimpulses am Ende des offenen Wellenleiters 30. Dieser Impuls P23 kann abhängig von der Art und Weise, in welcher der Wellenleiter in den Behälter eingebaut ist, auch positiv sein.

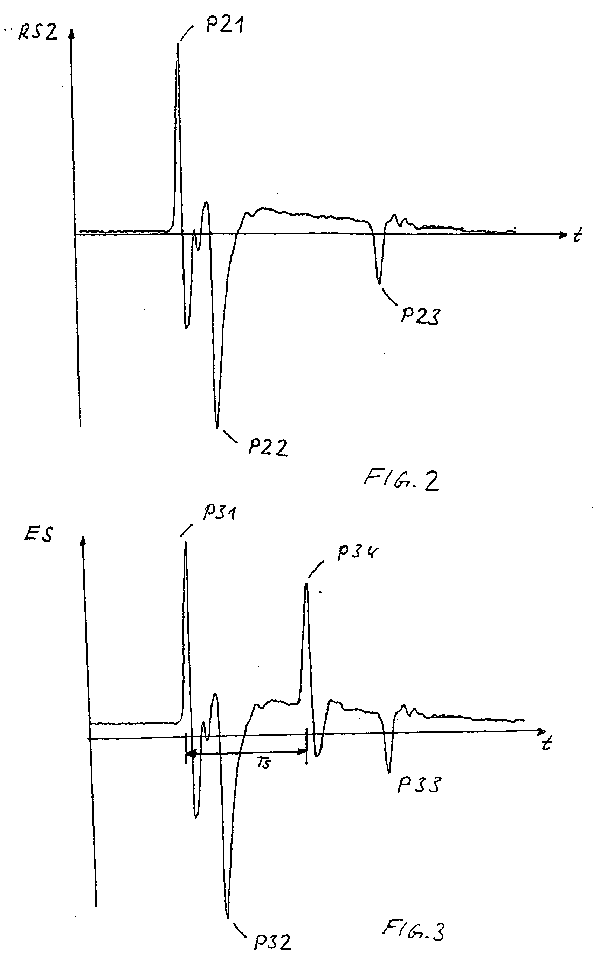

Während das zweite Referenzsignal RS2 ein Echosignal bei leeren Behälter 10 darstellt, zeigt Fig. 3 ein Echosignal ES bei gefülltem Behälter 10. Dieses Echosignal ES befindet sich zunächst auf einem niedrigen Pegel, bei welchem keine reflektierten Impulse oder Signale von dem Wellenleiter 30 empfangen werden. Im Anschluss an diesen annäherungsweise konstanten Bereich weist das Echosignal ES einen ersten Referenzimpuls P31 auf, der den Zeitpunkt der Absendung des Sendeimpulses markiert und der dem Impuls P21 des zweiten Referenzsignals RS2 entspricht. Ein späterer negativer Impuls P32 resultiert aus der Reflexion des Sendeimpulses an dem Übergang zwischen der Verbindungsleitung 40 und dem Wellenleiter 30 und entspricht dem Impuls P22 des zweiten Referenzsignals RS2.

Ein zeitlich noch später liegender Impuls P33 resultiert wie der Impuls P23 des zweiten Referenzsignals RS2 aus der Reflexion des Sendeimpulses am Ende des Wellenleiters 30. Dieser Impuls P33 ist nur bei schlecht reflektierenden Medien, wie zum Beispiel Öl, vorhanden.

Zwischen dem Impuls P32 und dem Impuls P33 weist das Echosignal ES einen positiven Impuls P34 auf, der aus einer Reflexion des Sendeimpulses in dem Wellenleiter an der Grenzfläche 21 zwischen der Flüssigkeit 22 und dem Gas 20 resultiert, an der eine Impedanzänderung des Wellenleiters 30 vorliegt. Aus dem zeitlichen Abstand Ts des ersten Referenzimpulses P31, der in dem Echosignal ES eine Referenz für das Absenden des Sendeimpulses darstellt, und den Impuls P34, kann auf die Signallaufzeit bis zur Reflexion an der Grenzfläche 21 und damit auf die Füllhöhe der Flüssigkeit in dem Behälter 22 geschlossen werden.

Zur Ermittlung der zeitlichen Lage des Impulses P34 in dem Signalverlauf des Echosignals ES ist bei dem erfindungsgemäßen Verfahren vorgesehen, das bei einem leeren Behälter ermittelte zweite Referenzsignal RS2 mit dem empfangenen Echosignal ES zu vergleichen, wobei der bei dem Echosignal ES gegenüber dem zweiten Referenzsignal RS2 zusätzlich vorhandene Impuls P34 die Reflexion des Sendeimpulses an der Grenzfläche zwischen den beiden Medien 22, 20 repräsentiert. Im einfachsten Fall wird das zweite Referenzsignal RS2 von dem Echosignal ES subtrahiert. Die Subtraktion erfolgt dabei punktweise durch Subtraktion von Amplitudenwerten, die sich an entsprechenden zeitlichen Positionen der Signalverläufe des zweiten Referenzsignals RS2 und des Echosignals ES befinden. Dabei wird angenommen dass die Verläufe der zu vergleichenden Signale, deren Abtastwerte beispielsweise in der Speicheranordnung SP abgespeichert sind, keinen zeitlichen Offset aufweisen. Ein Zeitpunkt, ab dem das Echosignal ES größer als das zweite Referenzsignal RS2 ist, kennzeichnet eine Reflexion des Sendesignals an der Grenzfläche zwischen der Flüssigkeit 22 und dem Gas 20.

Probleme kann bei einem derartigen Vorgehen ein Amplituden-Offset des zweiten Referenzsignals RS2 oder des Echosignals ES bereiten. Amplituden-Offset bezeichnet im vorliegenden Fall jeweils einen Wert, um welchen sich das Echosignal ES und das zweite Referenzsignal RS2 von Null unterscheiden, obwohl über die Verbindungsleitung 40 kein reflektiertes Signal aus dem Wellenleiter 30 in die Sende- und Empfangseinheit SAE eingekoppelt wird. Der Offset des Echosignals ES wird in Fig. 3 in dem Zeitabschnitt vor dem ersten Referenzsignal P31, also vor dem Absenden des Sendeimpulses deutlich.

Vor dem Vergleich des Echosignals ES und des zweiten Referenzsignals RS2 zur Ermittlung der zeitlichen Lage des reflektierten Impulses P34 sieht das erfindungsgemäße Verfahren daher zunächst vor, den Amplituden-Offset des zweiten Referenzsignals RS2 und den Amplituden-Offset des Echosignals ES zu ermitteln. Die Differenz aus diesen beiden Amplituden-Offsets wird dann von dem Signal mit dem größeren Amplituden-Offset abgezogen oder zu dem Signal mit dem kleineren Amplituden-Offset hinzugezählt, um einen Einfluss der Amplituden-Offsets beim Vergleich des zweiten Referenzsignals RS2 und des Echosignals ES zu vermeiden.

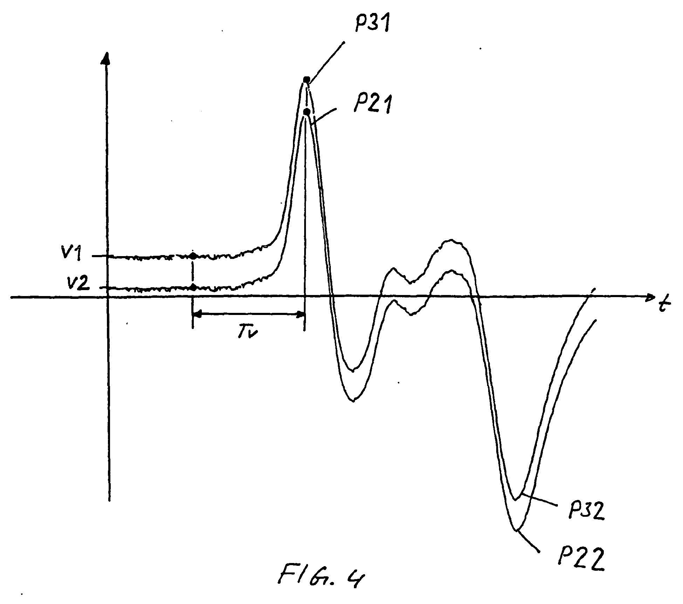

Das erfindungsgemäße Verfahren zur Ermittlung der Amplituden-Offsets wird nachfolgend anhand von Fig. 4 erläutert, in welcher das Echosignal ES und das zweite Referenzsignal RS2 ausschnittsweise bis zu den Impulsen P22, P32 dargestellt sind.

Bei der Darstellung gemäß Fig. 4 ist angenommen, dass das Echosignal ES und das zweite Referenzsignal RS2 keinen zeitlichen Offset aufweisen bzw. dass ein derartiger zeitlicher Offset für die weitere Verarbeitung bereits eliminiert wurde.

Das Verfahren sieht zunächst vor, das Maximum des ersten Referenzimpulses P31 des Echosignals ES und das Maximum des zweiten Referenzimpulses P21 des zweiten Referenzsignals RS2 zu ermitteln. Diese Maxima stellen jeweils das erste relative Maximum in den Signalverläufen des zweiten Referenzsignals RS2 und des Echosignals ES dar, da sich sowohl das zweite Referenzsignal RS2 als auch das Echosignal ES vor diesen Referenzimpulsen P31, P21, die eine Referenz für den Zeitpunkt des Sendeimpulses darstellen, auf einem annäherungsweise konstanten und niedrigen Pegel befinden. Ausgehend von dem Zeitpunkt, zu dem das Maximum des ersten und zweiten Referenzimpulses P31, P21 ermittelt wird, werden auf der Kurve des Echosignals ES ein erster Vergleichswert V1 und auf der Kurve des zweiten Referenzsignals RS2 ein zweiter Vergleichswert V2 ermittelt, die zeitlich jeweils um die Zeitdauer Tv vor dem jeweiligen Maximum liegen. Die Zeitdauer Tv ist dabei so groß gewählt, dass die Zeitpunkte, zu denen die Vergleichswerte V1, V2 ermittelt werden, vor dem Ansteigen der Flanken der ersten und zweiten Referenzimpulse P31, P21 liegen.

Der Vergleichswert V1 stellt ein Maß für den Amplituden-Offset des Echosignals ES und der zweite Vergleichswert V2 stellt ein Maß für den Amplituden-Offset des zweiten Referenzsignals RS2 dar, wobei diese Amplituden-Offset bei dem anschließenden Vergleich des Echosignals ES und des zweiten Referenzsignals RS2 zur Ermittlung der zeitlichen Lage des an der Grenzfläche 21 reflektierten Impulses P34 berücksichtigt werden.

Aufgrund parasitärer Effekte ist üblicherweise sowohl dem Echosignal ES, und damit auch dem zweiten Referenzsignal RS2, ein Rauschsignal niedriger Amplitude überlagert, welches sich insbesondere in den annäherungsweise konstanten Bereichen vor den Referenzimpulsen P21, P31 bemerkbar macht. Gemäß einer Ausführungsform der Erfindung ist daher vorgesehen, mehrere erste Vergleichswerte, die jeweils zeitlich zueinander beabstandet sind, auf der Echosignalkurve ES und eine entsprechende Anzahl zweiter Vergleichswerte auf der Signalkurve des zweiten Referenzsignals RS2 zu erzeugen und zur Ermittlung des jeweiligen Amplituden-Offsets den Mittelwert der ersten Vergleichswerte und der zweiten Vergleichswerte zu bilden.

Neben den Maxima der ersten und zweiten Referenzimpulse P31, P21 kann bei der Ermittlung der Vergleichswerte V1, V2 auch von Punkten auf der Echosignalkurve ES und der zweiten Referenzsignalkurve RS2 ausgegangen werden, die zeitlich vor den Maxima liegen und deren Amplitude in einem festen Verhältnis zum zugehörigen maximalen Amplitudenwert steht.

Um sicher zu gehen, dass zu den Zeitpunkten, zu denen die Vergleichswerte V1, V2 ermittelt werden, die Signalverläufe noch konstant verlaufen und die ansteigende Flanke der Referenzimpulse P31, P21 noch nicht erreicht ist, können ausgehend von den Maximumwerten der ersten und zweiten Referenzimpulse P31, P21 jeweils zeitlich vorher liegende benachbarte Amplitudenwerte jeweils einer der Kurven, d.h. der Echosignalkurve S oder der zweiten Referenzsignalkurve RS2, miteinander verglichen werden. Weichen die Amplituden dieser benachbarten Punkte der Signalkurven nicht mehr voneinander ab, so ist der konstante Bereich der Signalkurven vor den Referenzimpulsen P21, P31 erreicht und kann als jeweiliger Vergleichswert herangezogen werden.

Sollten die zweite Referenzsignalkurve RS2 und die Echosignalkurve ES zeitlich gegeneinander verschoben sein, kann ein derartiger zeitlicher Offset ebenfalls anhand der Maxima - oder entsprechender Amplitudenwerte an den Signalflanken - der Referenzimpulse P21, P31 ermittelt und ausgeglichen werden.

Der Impuls P21, bzw. der entsprechende Impuls P31 des Referenzsignals, resultiert aus der Einkopplung eines Referenzimpulses in das Echosignal. Anstelle der Impulse P21, P31 kann als Ausgangspunkt für die Ermittlung der ersten und zweiten Vergleichswerte auch von den Impulsen P22, P32 ausgegangen werden, die durch die Reflexion des Sendesignals an dem Übergang zwischen der Leitung 40 (Figur 1) und dem Wellenleiter 30 entstehen. Diese Reflexion tritt bei jedem mittels der Anordnung nach Figur 1 ausgesendeten Signal auf, so dass die resultierenden Impulse P21, P31 als Bezugspunkte bei der Ermittlung des Offset dienen können. Bei Verwendung der Impulse P22, P32 kann auf die Einkopplung des ersten Referenzimpulses P21 in das Echosignal verzichtet werden, wodurch der Schaltungsaufwand für eine Schaltungsanordnung zur Durchführung des erfindungsgemäßen Verfahrens verringert ist.

Bei Verwendung der negativen Impulse P22, P32 wird zunächst das Minimum der Impulse P22, P32, bzw. einen in einem festen zeitlichen Abstand vor oder nach dem Minimum liegender Wert, auf der Echosignalkurve und der Referenzsignalkurve ermittelt. Ausgehend von diesem Wert werden, wie oben erläutert, Vergleichswerte zur Ermittlung des Offset auf beiden Kurven ermittelt.

Zur Durchführung des erfindungsgemäßen Verfahrens weist die Vorrichtung gemäß Fig. 1 einen Analog-Digital-Wandler auf, welcher der Ausgangsklemme der Sende- und Empfangseinheit SAE nachgeschaltet ist. Ein mittels des Analog-Digital-Wandlers gebildetes zeitdiskretes Signal ist einer Auswerteeinheit AE zugeführt, an welche eine Speichereinheit SP mit wenigstens zwei Speicherplätzen SP1, SP2 zur Speicherung des zweiten Referenzsignals RS2 und eines Echosignals ES angeschlossen ist. Das bei leerem Behälter 10 ermittelte zweite Referenzsignal RS2 ist in einem der Speicher SP1, SP2 gespeichert und wird zur Ermittlung der Füllstandshöhe bei jedem Messvorgang mit einem Echosignal ES verglichen, welches vorübergehend in dem anderen der beiden Speicher SP2, SP1 gespeichert wird. Die Auswerteeinheit AE weist Mittel zum Vergleich eines Abschnitts des in dem Speicher SP gespeicherten Echosignals mit einem Abschnitt des in dem Speicher SP gespeicherten zweiten Referenzsignals RS2 und zur Ermittlung des Amplituden-Offset gemäß dem zuvor beschriebenen Verfahren auf.

Der zur Durchführung des erfindungsgemäßen Verfahrens herangezogene, bzw. abgespeicherte Abschnitt des Echosignals ES und des zweiten Referenzsignals RS2 beginnt vorzugsweise eine bestimmte Zeitdauer vor dem Sendeimpuls, d.h. vor den ersten und zweiten Referenzimpulsen P31, P21, welche den Sendeimpuls in dem Echosignal ES und dem zweiten Referenzsignal RS kennzeichnet, und endet eine bestimmte Zeitdauer nach den Signalimpulsen P23, P33, welche in dem Echosignal ES und dem Referenzsignal RS2 die Reflexion des Sendesignals an dem offenen Ende des Wellenleiters 30 kennzeichnen.

Die dem Analog-Digital-Wandler nachgeschaltete Auswerteeinheit mit dem Speicher SP ist vorzugsweise ein digitaler Signalprozessor oder ein handelsüblicher Computer, der mittels des beschriebenen Verfahrens unter Berücksichtigung der Amplituden-Offset des Echosignals ES und des zweiten Referenzsignals RS2 den zeitlichen Abstand zwischen dem ersten Referenzimpuls P31 und dem Impuls P34 ermittelt und aus diesem zeitlichen Abstand in Kenntnis der Frequenz des ausgesendeten Mikrowellensignals die Füllhöhe in dem Behälter 10 ermittelt.

### Bezugszeichenliste

- AE: Auswerteeinheit
- AMP: Verstärker
- AS: Ablaufsteuerung
- ES: Echosignal
- MUL: Multiplizierer
- OSZ1: erster Oszillator
- OSZ2: zweiter Oszillator
- P21: zweiter Referenzimpuls
- P22, P32: Impuls durch Reflexion an Anfang des Wellenleiters
- P23, P33: Impuls durch Reflexion am Ende des Wellenleiters
- P31: erster Referenzimpuls
- P34: Impuls durch Reflexion an der Grenzfläche 21
- RS2: zweites Referenzsignal
- SP: Speicher
- SP1: erste Speicherzelle
- SP2: zweite Speicherzelle
- Ts: zeitlicher Abstand zwischen den Impulsen
- ZI: Zirkulator

- 10: Behälter
- 20: Gas
- 21: Grenzbereich
- 22: Flüssigkeit
- 30: Wellenleiter
- 32: Anschlussvorrichtung
- 40: Verbindungsleitung

## Patentansprüche

1. Verfahren zur Entfernungsmessung mittels eines Signals, das in Richtung eines zu messenden Objekts mittels einer Sen-deeinrichtung ausgesendet wird, wobei von einer Empfangseinrichtung ein Echosignal (ES) empfangen wird, das einen ersten Referenzimpuls (P21; P22) aufweist, und wobei das Echosignal (ES) mit einem zweiten Referenzsignal (RS2), das einen zweiten Referenzimpuls (P31; P32) aufweist, zur Ermittlung einer Signallaufzeit verglichen wird, und wobei zur Ermittlung eines Amplituden-Offset zwischen dem Echosignal (ES) und dem zweiten Referenzsignal (RS2) ein erster Vergleichswert (V1) des Echosignals (ES) und ein zweiter Vergleichswert des zweiten Referenzsignals (RS2) miteinander verglichen werden, **dadurch gekennzeichnet, dass** die vergleichswerte zeitlich jeweils vor dem ersten bzw. zweiten Referenzimpuls (P21, P31; P22, P32) in einem Bereich der Echosignalkurve bzw. der zweiten Referenzsignalkurve liegen, in denen diese einen annäherungsweise konstanten Amplituden-verlauf aufweisen.

2. Verfahren nach Anspruch 1, bei dem dem Echosignal ein erster Referenzimpuls (P21) überlagert ist

3. Verfahren nach Anspruch 1 oder 2, bei dem jeweils ein Supremum der Amplitude des ersten Referenzimpulses (P21; P22) und des zweiten Referenzimpulses (P31; P32) ermittelt wird und bei dem jeweils ein Amplitudenwert der Echosignalkurve (ES) und der zweiten Referenzsignalkurve (RS2) als erster und zweiter Vergleichswert (V1, V2) herangezogen wird, der eine vorbestimmte Zeitdauer vor dem jeweiligen Supremum liegt.

4. Verfahren nach Anspruch 3, bei dem zur Ermittlung des ersten und zweiten Vergleichswerts (V1, V2) anstelle des Supremums des ersten und zweiten Referenzimpulses (P21, P31; P22, P32) jeweils von einem vor dem Supremum liegenden Amplitudenwert ausgegangen wird, der einen vorgegebenen Bruchteil des Supremums des ersten und zweiten Referenzimpulses (P21, P31; P22, P32) beträgt.

5. Verfahren nach einem der vorangehenden Ansprüche bei dem mehrere erste Vergleichswerte und mehrere zweite Vergleichswerte gebildet werden, deren Mittelwerte zur Ermittlung des Offset miteinander verglichen werden.

6. Verfahren nach Anspruch 1, bei dem jeweils vor dem Supremum des ersten Referenzimpulses (P21; P22) liegende benachbarte Amplitudenwerte miteinander verglichen werden, wobei als erster Vergleichswert ein Amplitudenwert herangezogen wird, bei welchem sich zwei benachbarte Werte nicht mehr unterscheiden, und bei dem jeweils vor dem Supremum des zweiten Referenzimpulses (P31; P32) liegende benachbarte Amplitudenwerte miteinander verglichen werden, wobei als zweiter Vergleichswert ein Amplitudenwert herangezogen wird, bei welchem sich zwei benachbarte Werte nicht mehr unterscheiden.

7. Verfahren nach einem der vorangehenden Ansprüche, bei dem zur Ermittlung eines zeitlichen Offset zwischen dem Echosignal und dem zweiten Referenzsignal die zeitlichen Lagen der Suprema des ersten Referenzimpulses (P21; P22) und des zweiten Referenzimpulses (P31; P32) ausgewertet werden.

8. Vorrichtung zur Entfernungsmessung mit einer Sende- und Empfangseinrichtung (SAE) zum Aussenden eines Signals und zum Empfangen eines Echosignals, einer Speichereinrichtung (SP) zum Speichern eines zweiten Referenzsignals, einer Auswerteeinrichtung (AE) zum Vergleichen des Echosignals und des zweiten Referenzsignals,
**dadurch gekennzeichnet, dass**
die Auswerteeinrichtung zur Ermittlung eines Amplituden-Offset zwischen dem Echosignal (ES) und dem zweiten Referenzsignal (RS2) eine erste Einheit zur Ermittlung eines vor einem ersten Referenzimpuls (P31) des Echosignals (ES) liegenden ersten Vergleichswertes (V1), der sich in einem Signalbereich des Echosignals mit annäherungsweise konstanten Amplituden verlauf befindet, und eine zweite Einheit zur Ermittlung eines vor einem zweiten Referenzimpuls (P21) des Echosignals (ES) liegenden zweiten Vergleichswertes (V2), der sich in einem Signalbereich mit annäherungsweise konstanten Amplituden verlauf, aufweist.

9. Vorrichtung nach Anspruch 8, bei welcher die Sende- und Empfangseinrichtung (SAE) dazu ausgebildet ist dem Echosignal (ES) ein erstes Referenzsignal (P31) zu überlagern.

## Claims

1. A method for measuring distance using a signal which is emitted towards an object to be measured by means of a transmitter, whereby a receiver receives an echo signal (ES) comprising a first reference pulse (P21; P22), and whereby the echo signal (ES) is compared with a second reference signal (RS2) comprising a second reference pulse (P31; P32) for determining a signal time of flight, and whereby to determine an amplitude offset between the echo signal (ES) and the second reference signal (RS2) a first comparison value (V1) of the echo signal (ES) and a second comparison value of the second reference signal (RS2) are compared with one another,
**characterised in that** the comparison values in each case lie in time before the first or second reference pulse (P21, P31; P22, P32) in a range of the echo signal curve or of the second reference signal curve in which these comprise an approximately constant amplitude response.

2. A method according to Claim 1, with which a first reference pulse (P21) is superimposed on the echo signal.

3. A method according to Claim 1 or 2, with which in each case a supremum of the amplitude of the first reference pulse (P21; P22) and of the second reference pulse (P31; P32) is determined and with which in each case an amplitude value of the echo signal curve (ES) and of the second reference signal curve (RS2) are used as the first and second comparison values (V1, V2), which lie a predetermined length of time before the respective supremum.

4. A method according to Claim 3, with which to determine the first and second comparison values (V1, V2), instead of the supremum of the first and second reference pulses (P21, P31; P22, P32) in each case an amplitude value lying before the supremum is assumed, which is a predetermined fraction of the supremum of the first and second reference pulse (P21, P31; P22, P32).

5. A method according to one of the preceding Claims, with which several first comparison values and several second comparison values are formed, the average values of which are compared with one another to determine the offset.

6. A method according to Claim 1, with which in each case amplitude values adjacent to each other before the supremum of the first reference signal (P21; P22) are compared with each other, whereby an amplitude value is used as the first comparison value, in which two adjacent values are no longer different, and in which in each case amplitude values adjacent to each other before the supremum of the second reference pulse (P31; P32) are compared with one another, whereby as the second comparison value an amplitude value is used in which two adjacent values are no longer different.

7. A method according to one of the preceding Claims, with which the time positions of the suprema of the first reference pulse (P21; P22) and of the second reference pulse (P31; P32) are analysed to determine a time offset between the echo signal and the second reference signal.

8. An apparatus for measuring distance, comprising a transmit and receive unit (SAE) for transmitting a signal and for receiving an echo signal, a memory device (SP) for storing a second reference signal, and an analysis device (AE) for comparing the echo signal and the second reference signal,
**characterised in that** the analysis device for determining an amplitude offset between the echo signal (ES) and the second reference signal (RS2) comprises a first unit for determining a first comparison value (V1) lying before a first reference pulse (P31) of the echo signal (ES), which comparison value is situated in a signal range of the echo signal with an approximately constant amplitude response, and a second unit for determining a second comparison value (V2) lying before a second reference pulse (P21) of the echo signal (ES), which comparison value is situated in a signal range with an approximately constant amplitude response.

9. An apparatus according to Claim 8, with which the transmit and receive unit (SAE) is designed to superimpose a first reference signal (P31) on the echo signal (ES).

## Revendications

1. Procédé de télémétrie au moyen d'un signal émis dans la direction d'un objet à mesurer au moyen d'un dispositif d'émission, dans lequel un signal d'écho (ES) qui présente une première impulsion de référence (P21 ; P22) est reçu par un dispositif de réception, selon lequel on compare le signal d'écho (ES) à un deuxième signal de référence (RS2) qui présente une deuxième impulsion de référence (P31 ; P32) pour déterminer un temps de propagation, et pour déterminer un décalage d'amplitude entre le signal d'écho (ES) et le deuxième signal de référence (RS2), on compare entre elles une première valeur de comparaison (V1) du signal d'écho (ES) et une deuxième valeur de comparaison du deuxième signal de référence (RS2),
**caractérisé en ce que**
les valeurs de comparaisons sont à chaque fois situées dans le temps avant la première ou deuxième impulsion de référence (P21, P31 ; P22, P32) dans une plage de la courbe de signal d'écho ou de la deuxième courbe de signal de référence, dans laquelle celles-ci présentent une courbe d'amplitude presque constante.

2. Procédé selon la revendication 1,
selon lequel
on combine une première impulsion de référence (P21) au signal d'écho.

3. Procédé selon la revendication 1 ou 2,
selon lequel
on détermine à chaque fois une valeur suprême de l'amplitude de la première impulsion de référence (P21 ; P22) et de la deuxième impulsion de référence (P31 ; P32) et on extrait à chaque fois une valeur d'amplitude de la courbe de signal d'écho (ES) et de la deuxième courbe de signal de référence (RS2) comme première et deuxième valeur de comparaison (V1, V2) qui présente une durée prédéfinie située avant la valeur suprême respective.

4. Procédé selon la revendication 3,
selon lequel
pour déterminer la première et la deuxième valeur de comparaison (V1, V2), à la place de la valeur suprême de la première et de la deuxième impulsion de référence (P21, P31 ; P22, P32), on part à chaque fois d'une valeur d'amplitude située avant la valeur suprême et qui représente une fraction prédéfinie de la valeur suprême de la première et deuxième impulsion de référence (P21, P31 ; P22, P32).

5. Procédé selon l'une des revendications précédentes,
selon lequel
on forme plusieurs premières valeurs de comparaison et plusieurs deuxièmes valeurs de comparaison et on compare leurs valeurs moyennes entre elles pour déterminer le décalage.

6. Procédé selon la revendication 1,
selon lequel
on compare à chaque fois entre elles des valeurs d'amplitude voisines, situées avant la valeur suprême de la première impulsion de référence (P21 ; P22) et, pour servir de première valeur de comparaison, on extrait une valeur d'amplitude pour laquelle deux valeurs voisines ne se distinguent plus,
et on compare à chaque fois entre elles des valeurs d'amplitude voisines, situées avant la valeur suprême de la deuxième impulsion de référence (P31 ; P32) et, pour servir de deuxième valeur de comparaison, on extrait une valeur d'amplitude pour laquelle deux valeurs voisines ne se distinguent plus.

7. Procédé selon l'une des revendications précédentes,
selon lequel
pour déterminer un décalage dans le temps entre le signal d'écho et le deuxième signal de référence, on exploite les situations temporelles des valeurs suprêmes de la première impulsion de référence (P21 ; P22) et de la deuxième impulsion de référence (P31 ; P32).

8. Dispositif de télémétrie comprenant un dispositif d'émission et de réception (SAE) pour émettre un signal et pour recevoir un signal d'écho, un dispositif de mémoire (SP) pour mémoriser un deuxième signal de référence, un dispositif d'exploitation (AE) pour comparer le signal d'écho et le deuxième signal de référence,
**caractérisé en ce que**
le dispositif d'exploitation présente, pour déterminer un décalage d'amplitude entre le signal d'écho (ES) et le deuxième signal de référence (RS2), une première unité pour déterminer une première valeur de comparaison (V1) située avant une première impulsion de référence (P31) du signal d'écho (ES) et qui se trouve dans une plage de signal du signal d'écho présentant une courbe d'amplitude presque constante, et une deuxième unité pour déterminer une deuxième valeur de comparaison (V2) située avant une deuxième impulsion de référence (P21) du signal d'écho (ES) qui se trouve dans une plage de signal présentant une courbe d'amplitude presque constante.

9. Dispositif selon la revendication 8,
dans lequel
le dispositif d'émission et de réception (SAE) est configuré pour combiner un premier signal de référence (P31) au signal d'écho (ES).
